# DEMANDE DE BREVET EUROPEEN

(11) **EP 3 822 653 A1**
(43) Date de publication de la demande: **19.05.2021**
(21) Numéro de dépôt: 20206633.8
(22) Date de dépôt: 10.11.2020
(51) Int. Cl.: G01S 5/02, G01S 5/00, G01S 5/06, H04B 7/185

(54) **PROCEDE ET SYSTEME DE LOCALISATION ET COMMUNICATION SATELLITAIRE D'UN TERMINAL RADIOELECTRIQUE FIXE AU SOL UTILISANT AU MOINS UN SATELLITE DEFILANT**

(30) Priorité: 14.11.2019 FR 1912692
(71) Demandeur: THALES, 92400 Courbevoie (FR)
(72) Inventeur: PEYROTTE, Christian, 31100 TOULOUSE (FR); KHUREIM CASTIGLIONI, Shadi, 31100 TOULOUSE (FR); VAN WAMBEKE, Nicolas, 31100 TOULOUSE (FR)
(74) Mandataire: Marks & Clerk France

(57) **Abrégé**

L'invention concerne un procédé de localisation et de communication d'un terminal radioélectrique par un système satellitaire de localisation et communication (2) met en œuvre une première étape au cours de laquelle le terminal radioélectrique (20) émet vers un satellite défilant (10) une séquence de répétition un nombre prédéterminé N de fois d'un même paquet de données qui à chaque fois est décalé temporellement d'un même décalage temporel Δ*τ* prédéterminé.

Postérieurement, une station sol d'accès satellitaire et de traitement (30) détermine la localisation du terminal radioélectrique à partir des paquets de données à accès extraits d'un signal d'écoute numérisé et daté par le satellite et d'une même séquence détectée associée audit terminal radioélectrique, et à partir des éphémérides du satellite en utilisant une technique de mesure d'angle(s) d'arrivée par interférométrie séquencée associée à une technique de mesure de dérive(s) Doppler.

## Description

La présente invention concerne un procédé et un système de localisation et communication satellitaire d'un terminal radioélectrique fixe au sol utilisant au moins un satellite défilant.

La présente invention s'applique notamment au domaine des communications spatiales à couverture mondiale, sporadiques et à faibles débits entre des objets connectés appartenant à l'Internet des Objets IoT (en anglais « Internet of Things »). Dans ce cas, chacun des objets connectés comporte un terminal radioélectrique qui, tout en ne pouvant émettre des signaux radioélectriques qu'à un très faible niveau de transmission, est capable de communiquer avec une constellation satellitaire de satellites défilants, pouvant être réduite à un seul satellite défilant soit en permanence, soit dans une phase initiale de déploiement de la constellation.

Les systèmes actuellement opérationnels et connus ORBCOM, IRIDIUM et ARGOS assurent un service de communication et de localisation à couverture mondiale, le système ARGOS fournissant la localisation la plus précise. Tous ces systèmes sont dimensionnés pour assurer un bouclage positif du bilan de liaison de la liaison montante depuis le terminal vers le(s) satellite(s) visible(s), un bilan de liaison étant bouclé positivement lorsque le niveau du rapport signal à bruit au niveau du récepteur satellite est supérieur à un seuil de démodulation prédéterminé. Tous ces systèmes nécessitent également, la combinaison d'informations de plusieurs satellites en vue du terminal émetteur.

Un premier problème technique est de fournir un procédé et un système de localisation d'un terminal radioélectrique, fixe ou mobile à faible vitesse au sol, compatible de l'utilisation d'un seul satellite défilant et d'un bilan de liaison non bouclé positivement entre le terminal et le satellite.

Par ailleurs, il convient de déterminer une technique de localisation qui permette d'augmenter la précision de localisation du terminal sol et de diminuer la complexité de la réception au niveau d'un satellite de la constellation. De manière connue, la localisation d'un terminal fixe ou mobile à faible vitesse au sol en mode émission à partir d'un ou plusieurs satellites repose sur des techniques de mesure de temps d'arrivée du signal TDOA (en anglais « Time Différence Of Arrivai ») et/ou de fréquence d'arrivée du signal FDOA (en anglais « Frequency Différence Of Arrivai », et/ou de mesure de dérive Doppler, et/ou de mesure de l'angle d'arrivée du signal. Les solutions techniques TDOA et FDOA sont fondées sur des mesures effectuées sur plusieurs satellites et ne permettent pas de répondre au premier problème technique. La solution technique fondée sur la dérive Doppler est simple en terme de traitement mais peu précise. Une solution technique fondée sur la mesure d'angle d'arrivée du signal par interférométrie associée à une mesure de Doppler semble prometteuse en raison de son accessibilité par un seul satellite. Par exemple, le brevet US 10, 126, 405 B2 décrit un tel système. Dans le cas de l'utilisation d'une interférométrie unidimensionnelle 1D, une bonne précision de localisation est atteinte en traitant l'information sur une large base interférométrique avec une connaissance a priori de la position géographique du satellite. Classiquement, une interférométrie 1D unidimensionnelle implique une antenne réseau linéaire composée d'éléments antennaires, espacés d'une demi-longueur d'onde λ/2 de la porteuse du signal radioélectrique, afin de pouvoir déterminer l'angle d'arrivée sans repli des lobes de réseau de l'antenne et sans ambiguïté tout en permettant d'atteindre un gain d'antenne important. Une telle solution présente toutefois l'inconvénient d'une complexité élevée au niveau de la réception satellitaire en termes de développement de l'antenne, de l'aménagement de l'antenne sur la plateforme, et de tests en rayonnement délicats.

Un deuxième problème technique est de fournir un procédé et un système de localisation d'un terminal radioélectrique, fixe au sol, compatibles de l'utilisation d'un seul satellite défilant et d'un bilan de liaison non bouclé positivement entre le terminal et le satellite, et d'une antenne de réception satellitaire plus simple et moins encombrante.

A cet effet l'invention a pour objet un procédé de localisation et de communication d'un terminal radioélectrique, mis en œuvre par un système satellitaire comprenant un ou plusieurs satellite(s) défilant(s) à couverture mondiale, un ou plusieurs terminaux radioélectriques à localiser, visible(s) depuis le ou les satellite(s) pendant des premières fenêtres temporelles F1 d'écoute des terminaux par le(s) satellite(s), et au moins une station sol d'accès satellitaire et de traitement visible depuis le(s) satellite(s) pendant des deuxièmes fenêtres temporelles F2 de rapatriement de données de communication et de localisation de terminaux radioélectriques à localiser.

Le procédé est caractérisé en ce qu'il comprend les étapes consistant à :
- émettre périodiquement par un terminal radioélectrique une séquence de répétition un nombre prédéterminé N de fois, supérieur ou égal à 2, d'un même paquet de données à accès non encodé ou à accès encodé suivant un schéma de codage d'accès prédéterminé et qui à chaque fois est décalé temporellement d'un même décalage temporel Δ-*τ* prédéterminé, chaque paquet de données à accès non encodé ou non encodé étant modulé sur une porteuse radiofréquence à une longueur d'onde prédéterminée *λ* pour former un signal RF de communication et de localisation ; puis
- recevoir par le satellite défilant via une unique antenne à grande ouverture angulaire dans la première fenêtre d'écoute dudit satellite, à partir d'une date de début d'acquisition et pendant une durée d'acquisition prédéterminée, un signal d'écoute formé par le signal radiofréquence de communication et de localisation émis par le terminal radiofréquence et tous les autres signaux radiofréquence perceptibles dans une même bande de fréquence que celle dudit signal de communication et de localisation, formant un signal d'écoute, puis numériser le signal d'écoute à la fréquence porteuse ou à une fréquence intermédiaire en un paquet de données d'acquisition et dater suivant une horloge du satellite à précision élevée le paquet de données d'acquisition, sauvegarder le paquet d'acquisition daté, puis rapatrier les données du paquet d'acquisition daté à la station sol d'accès et de traitement dans la deuxième fenêtre temporelle de rapatriement par une transmission haut débit descendante du signal d'écoute numérisé ; puis
- déterminer par la station sol d'accès satellitaire et de traitement la localisation du terminal radioélectrique à partir des paquets de données à accès non encodé ou à accès encodé, extraits du signal d'écoute numérisé daté et d'une même séquence associée audit terminal radioélectrique, et à partir des éphémérides du satellite en utilisant une technique de mesure d'angle(s) d'arrivée par interférométrie séquencée associée à une technique de mesure de dérive(s) Doppler.

Suivant des modes particuliers de réalisation, le procédé de localisation et de communication comprend l'une ou plusieurs des caractéristiques suivantes :
- le satellite ou chaque satellite de la constellation se déplace à une vitesse de déplacement par rapport à la Terre ayant un module prédéterminé v et le décalage temporel de deux paquets successifs de la séquence est supérieur ou égal au rapport de la longueur d'onde *λ* de la porteuse radiofréquence du signal radiofréquence par le double du module v de la vitesse de déplacement du satellite ;
- chaque paquet de données à accès non encodé, répété N fois en étant à chaque fois décalé temporellement du même décalage temporel Δ*τ*, a une trame formée d'une entête de synchronisation, d'un identifiant du terminal radioélectrique formant émetteur dudit paquet, et de données utiles de communication à transmettre ; ou chaque paquet de données à accès encodé, répété N fois en étant à chaque fois décalé temporellement du même décalage temporel, a une trame formée d'un empilement de N codes pseudo-aléatoires PN, de même longueur et mutuellement orthogonaux, modulés par des donnés à débit plus petit que celui des bribes des codes PN incluant une entête fixe de synchronisation, un identifiant du terminal radioélectrique formant émetteur dudit paquet et des données utiles de communication à transmettre, chaque code PN étant une séquence cyclique déphasée à chaque fois d'un décalage de phase correspondant au décalage temporel Δ*τ* ; ou chaque paquet de données à accès encodé, répété N fois en étant à chaque fois décalé temporellement du même décalage temporel Δ*τ* , a une trame, formée d'un identifiant du terminal radioélectrique formant émetteur dudit paquet, et de données utiles de communication à transmettre, et modulée par une sous-porteuse correspondant à un saut de fréquence vis-à-vis de la fréquence porteuse, différent à chaque fois et dont la valeur dépend du rang temporel du paquet de donnés dans la séquence, la somme du saut de fréquence le plus petit et le saut de fréquence le plus grand étant nulle ;
- un ou deux angles d'arrivée sont déterminés sans ambigüité par interférométrie séquencée associée à la mesure de la dérive Doppler ;
- la station sol d'accès satellitaire et de traitement extrait du signal d'écoute numérisé rapatrié les N paquets de la séquence émise par le terminal radioélectrique en transposant le signal d'écoute numérisé rapatrié en bande de base ou dans une bande de fréquences intermédiaire ; puis en décodant et démodulant le signal d'écoute transposé suivant le schéma d'accès utilisé en une séquence des N paquets reçus par le satellite, décodés suivant l'encodage d'accès lorsqu'il existe et démodulés, une estimation de la dérive Doppler et une estimation du décalage temporel entre les paquets consécutifs de la séquence étant effectué en parallèle ; puis localise le terminal radioélectrique identifié suivant un ou deux angles d'arrivée à partir des décalages temporels en réception du satellite estimé, de la datation de la séquence d'écoute et des éphémérides du satellite, en utilisant une interférométrie séquence ;
- le nombre N de répétitions du même paquet dans une séquence émise par le terminal radioélectrique est compris entre 2 et 16, de préférence 2 et 8 ; et/ou le nombre N de répétitions du même paquet dans une séquence émise par le terminal radioélectrique dépend du bilan de liaison de la liaison montant depuis le terminal radioélectrique en mode émission et le satellite en mode écoute ;
- le système satellitaire comporte un seul satellite défilant à couverture mondiale et l'unique satellite reçoit au moins deux séquences du même paquet du terminal radiofréquence pendant une même visite à la même fenêtre temporelle d'écoute sur deux arcs séparés de l'orbite ou lors de deux visites différentes à deux fenêtres temporelles d'écoute différentes ; ou le système satellitaire comporte une constellation d'au moins deux satellites et au moins deux satellites reçoivent chacun la même séquence du même paquet dans des fenêtres temporelles d'écoute respectives qui sont proches ou se recoupent ;
- au moins deux mesures d'angles d'arrivées non coplanaires et de dérives Doppler associées sont déterminées et permettent une localisation tridimensionnelle 3D sans ambigüité du terminal radiofréquence situé au sol ;
- chaque paquet de données à accès encodé, répété N fois en étant à chaque fois décalé temporellement du même décalage temporel, a une trame formée d'un empilement de N codes pseudo-aléatoires PN, de même longueur et mutuellement orthogonaux, modulés par des donnés à débit plus petit que celui des bribes des codes PN incluant une entête fixe de synchronisation, un identifiant du terminal radioélectrique formant émetteur dudit paquet et des données utiles de communication à transmettre, chaque code PN étant une séquence cyclique déphasée à chaque fois d'un décalage de phase correspondant au décalage temporel Δ-*τ* ; et la station sol d'accès satellitaire et de traitement du signal d'écoute numérisé rapatrié sur la liaison descendante d'accès met en œuvre les étapes consistant à : transposer le signal d'écoute numérisé rapatrié en bande de base ou dans une bande de fréquences intermédiaire ; puis démoduler et décoder le signal d'écoute transposé en N paquets d'une même séquence reçu, associés audit terminal radioélectrique et reçus par le satellite, et en parallèle effectuer une estimation de la dérive Doppler et une estimation du décalage temporel entre les paquets consécutifs de la séquence, en corrélant en parallèle le signal d'écoute numérisé avec les N répliques des codes PN attendus ; puis en estimant les décalages temporels entre les paquets consécutifs de la séquence à partir des pics de corrélation obtenus ; puis déterminer la localisation du terminal radioélectrique à partir des décalages temporels entre les paquets consécutifs de la séquence, de la datation de la séquence d'écoute et des éphémérides du satellite en utilisant une technique de mesure d'angle(s) d'arrivée par interférométrie séquencée associée à une technique de mesure de dérive(s) Doppler ;
- chaque paquet de données à accès encodé, répété N fois en étant à chaque fois décalé temporellement du même décalage temporel Δ*τ*, a une trame, formée d'un entête de synchronisation, d'un identifiant du terminal radioélectrique formant émetteur dudit paquet, et de données utiles de communication à transmettre, et modulée par une sous-porteuse correspondant à un saut de fréquence vis-à-vis de la fréquence porteuse, différent à chaque fois et dont la valeur dépend du rang temporel du paquet de donnés dans la séquence, la somme du saut de fréquence le plus petit et le saut de fréquence le plus grand étant nulle ; et la station la station sol d'accès et de traitement du signal d'écoute numérisé rapatrié sur la liaison descendante d'accès met en œuvre les étapes consistant à : transposer le signal d'écoute numérisé rapatrié en bande de base ou dans une bande de fréquences intermédiaire ; puis démoduler et décoder le signal d'écoute transposé en N paquets d'une même séquence reçu, associés audit terminal radioélectrique et reçus par le satellite, et en parallèle effectuer une estimation de la dérive Doppler et une estimation du décalage temporel entre les paquets consécutifs de la séquence, en corrélant le signal d'écoute avec les signaux des N paquets de la séquence par un recalage attendu en fréquence desdits signaux des N paquets et en sommant les signaux des desdits paquets recalés en fréquence en appliquant à chacun un déphasage spécifique permettant d'augmenter ladite valeur du rapport signal sur bruit ; puis en estimant les décalages temporels entre les paquets consécutifs de la séquence à partir des signaux des paquets démodulés ; puis déterminer la localisation du terminal radioélectrique à partir des décalages temporels entre les paquets consécutifs de la séquence, de la datation de la séquence d'écoute et des éphémérides du satellite en utilisant une technique de mesure d'angle(s) d'arrivée par interférométrie séquencée associée à une technique de mesure de dérive(s) Doppler.

L'invention a également pour objet un système de localisation et de communication d'au moins un terminal radioélectrique, comprenant un ou plusieurs satellite(s) défilant(s) d'une constellation à couverture mondiale, un ou plusieurs terminaux radioélectriques à localiser, visible(s) depuis le ou les satellite(s) pendant des premières fenêtres temporelles F1 d'écoute des terminaux par le(s) satellite(s), et au moins une station sol d'accès satellitaire et de traitement visible depuis le(s) satellite(s) pendant des deuxièmes fenêtres temporelles F2 de rapatriement de données de communication et de localisation de terminaux radioélectriques à localiser.

Le système de communication est caractérisé en ce que : chaque terminal radioélectrique est configuré pour émettre périodiquement une séquence de répétition un nombre prédéterminé N de fois, supérieur ou égal à 2, d'un même paquet de données à accès non encodé ou à accès encodé schéma d'accès prédéterminé, et qui à chaque fois est décalé temporellement d'un même décalage temporel Δ*τ* prédéterminé, chaque paquet de données à accès non encodé ou accès codé suivant le schéma d'accès étant modulé sur une porteuse radiofréquence à une longueur d'onde prédéterminée *λ* pour former un signal RF de communication et de localisation ; et chaque satellite défilant comporte une unique antenne d'écoute, non directive à grande ouverture angulaire, et est configuré via son antenne d'écoute pour recevoir dans sa première fenêtre d'écoute, à partir d'une date de début d'acquisition et pendant une durée d'acquisition prédéterminée, un signal d'écoute formé par le signal radiofréquence de communication et de localisation émis par le terminal radiofréquence et tous les autres signaux radiofréquence perceptibles dans une même bande de fréquence que celle dudit signal de communication et de localisation, puis numériser le signal d'écoute à la fréquence porteuse ou à une fréquence intermédiaire en un paquet de données d'acquisition et dater le paquet de données suivant une horloge du satellite à précision élevée, sauvegarder le paquet daté, puis rapatrier les données du paquet daté à la station sol d'accès et de traitement dans la deuxième fenêtre temporelle de rapatriement par une transmission haut débit descendante du signal d'écoute numérisé ; et la station sol d'accès satellitaire et de traitement comporte un ou plusieurs calculateurs électroniques pour déterminer la localisation de chaque terminal radioélectrique à partir des paquets de données datés à accès non encodé ou à accès codé, extraits du signal d'écoute numérisé daté et à partir des éphémérides du ou des satellites de la constellation en utilisant une technique de mesure d'angle(s) d'arrivée par interférométrie séquencée associé à une technique de mesure de dérive(s) Doppler.

Suivant des modes particuliers de réalisation, le système de localisation et de communication comprend l'une ou plusieurs des caractéristiques suivantes :
- le ou les satellites décrivent chacun une orbite comprise dans l'ensemble des orbites basses LEO et des orbites moyennes MEO, et le satellite ou chaque satellite de la constellation se déplace(nt) à une vitesse de déplacement par rapport à la Terre ayant un module prédéterminé v et le décalage temporel de deux paquets successifs de la séquence est supérieur ou égal au rapport de la longueur d'onde *λ* de la porteuse radiofréquence du signal radiofréquence par le double du module v de la vitesse de déplacement du satellite.

L'invention a également pour objet un terminal de localisation et de communication comprenant un émetteur radiofréquence à fable puissance, couplé à une antenne émettrice non directive, de préférence omnidirectionnelle, et un module émetteur bande de base connecté en amont de l'émetteur radiofréquence. Le terminal radioélectrique est caractérisé en ce que l'émetteur radiofréquence, l'antenne émettrice du terminal et le module émetteur bande de base sont configurés pour émettre périodiquement une séquence de répétition un nombre prédéterminé de fois N supérieur ou égal à 2 d'un même paquet de données à accès non codé ou à accès encodé suivant un schéma de codage d'accès prédéterminé et qui à chaque fois est décalé temporellement d'un même décalage temporel Δ*τ* prédéterminé, chaque paquet de données à accès non encodé ou non encodé étant modulé sur une porteuse radiofréquence à une longueur d'onde prédéterminée *λ* pour former un signal RF de communication et de localisation.

Suivant des modes particuliers de réalisation, le terminal de localisation et de communication comprend l'une ou plusieurs des caractéristiques suivantes :
- le décalage temporel de deux paquets successifs de la séquence est supérieur ou égal au rapport de la longueur d'onde *λ* de la porteuse radiofréquence du signal radiofréquence par le double du module v de la vitesse de déplacement du satellite ; et chaque paquet de donnée à accès non encodé, répété N fois en étant à chaque fois décalé temporellement du même décalage temporel Δ*τ*, a une trame formée d'une entête de synchronisation, d'un identifiant du terminal radioélectrique formant émetteur dudit paquet, et de données utiles de communication à transmettre ; ou chaque paquet de donné à accès encodé, répété N fois en étant à chaque fois décalé temporellement du même décalage temporel, a une trame formée d'un empilement de N codes pseudo-aléatoires PN, de même longueur et mutuellement orthogonaux, modulés par des donnés à débit plus petit que celui des bribes des codes PN incluant une entête fixe de synchronisation, un identifiant du terminal radioélectrique formant émetteur dudit paquet et des données utiles de communication à transmettre, chaque code PN étant une séquence cyclique déphasée à chaque fois d'un décalage de phase correspondant au décalage temporel Δ*τ* ; ou chaque paquet de données à accès encodé, répété N fois en étant à chaque fois décalé temporellement du même décalage temporel Δτ, a une trame, formée d'un identifiant du terminal radioélectrique formant émetteur dudit paquet, et de données utiles de communication à transmettre, et modulée par une sous-porteuse correspondant à un saut de fréquence vis-à-vis de la fréquence porteuse, différent à chaque fois et dont la valeur dépend du rang temporel du paquet de donnés dans la séquence, la somme du saut de fréquence le plus petit et le saut de fréquence le plus grand étant nulle.

L'invention a également pour objet un satellite défilant d'un système satellitaire de communication et de localisation de terminaux radioélectriques situés au sol, comprenant une plateforme pour faire évoluer le satellite sur un orbite de type LEO ou MEO et comprenant une antenne réception d'écoute, un récepteur RF satellite d'écoute, une unité de numérisation, et une mémoire de masse de sauvegarde, connectés en série. Le satellite est caractérisé en ce que : l'antenne de réception d'écoute est une unique antenne non directive à grande ouverture angulaire, de préférence un simple cornet, et l'antenne de réception et le récepteur RF satellite sont configurés pour recevoir dans une première fenêtre d'écoute satellitaire, à partir d'une date de début d'acquisition et pendant une durée d'acquisition prédéterminée, un signal d'écoute formé par un signal radiofréquence de communication et de localisation émis par un terminal radiofréquence et tous les autres signaux radiofréquence perceptibles dans une même bande de fréquence que celle dudit signal de communication et de localisation, formant un signal d'écoute ; et l'unité de numérisation est configurée pour numériser un signal d'écoute à la fréquence porteuse ou à une fréquence intermédiaire en un paquet de données d'acquisition et dater le paquet de données suivant une horloge bord de précision élevée, le signal d'écoute contenant un signal radiofréquence de communication et de localisation émis par le terminal radiofréquence à localiser ; et la mémoire de masse est configurée pour sauvegarder le paquet d'acquisition daté.

L'invention a également pour objet une station sol d'accès et de traitement d'un système satellitaire de communication et de localisation de terminaux radioélectriques situés au sol, comprenant un récepteur sol d'une liaison descendante de rapatriement de données d'écoute, une unité de traitement numérique, et dans lequel le récepteur sol et l'unité de traitement numérique (308) sont configurés pour extraire du signal d'écoute numérisé rapatrié une séquence de N paquets répétés et décalés à chaque fois d'un même décalage temporelle Δτ prédéterminé, à accès non encodé ou à accès encodé suivant un schéma d'accès prédéterminé, d'une séquence émise par un le terminal radioélectrique : en transposant le signal d'écoute numérisé rapatrié en bande de base ou dans une bande de fréquences intermédiaire ; puis en décodant et démodulant le signal d'écoute transposé suivant le schéma d'accès utilisé en une séquence des N paquets reçus par le satellite, décodés suivant l'encodage d'accès lorsqu'il existe et démodulés, une estimation de la dérive Doppler et une estimation du décalage temporel entre les paquets consécutifs de la séquence étant effectué en parallèle ; et pour localiser le terminal radioélectrique identifié suivant un ou deux angles d'arrivée à partir des décalages temporels en réception du satellite estimé, de la datation de la séquence d'écoute et des éphémérides du satellite, en utilisant une interférométrie séquencée.

D'autres caractéristiques et avantages de la présente invention apparaîtront mieux à la lecture de la description qui suit en relation aux dessins annexés qui représentent :
Figure 1 l'architecture d'un système satellitaire de localisation et communication d'au moins un terminal radioélectrique selon l'invention ;
Figure 2 une succession de vues de la mise en œuvre du système satellitaire de communication et localisation de la Figure 1 lors de la phase d'émission de paquets de localisation par un terminal de localisation à destination d'un satellite défilant ;
Figure 3 l'architecture d'un terminal radioélectrique selon l'invention du système satellitaire de communication et localisation de la Figure 1 ;
Figure 4 un exemple d'architecture du satellite défilant selon l'invention du système satellitaire de communication et localisation de la Figure 1, en particulier l'architecture de la charge utile d'écoute et de rapatriement des données d'écoute ;
Figure 5 l'architecture de la station d'accès satellitaire et de traitement selon l'invention, composante du système satellitaire de communication et localisation de la Figure 1 ;
Figure 6 un ordinogramme du procédé de communication et de localisation d'au moins un terminal radioélectrique selon l'invention mis en œuvre par le système satellitaire de communication et localisation de la Figure 1.

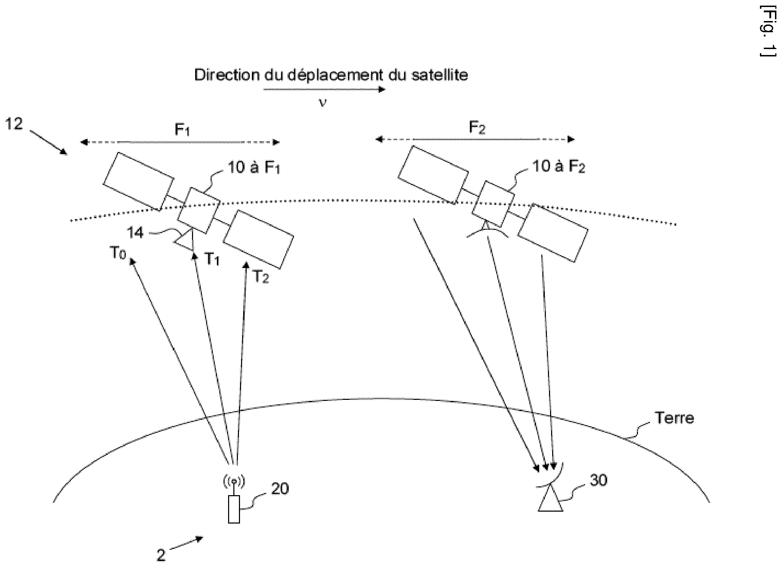

Suivant la Figure 1, un système satellitaire de communication et localisation 2 d'au moins un terminal radioélectrique, comprenant un ou plusieurs satellite(s) défilant(s) 10 d'une constellation 12 à couverture mondiale, un ou plusieurs terminaux radioélectriques 20 à localiser, visible(s) depuis le ou les satellite(s) 10 pendant des premières fenêtres temporelles F1 d'écoute des terminaux 10 par le(s) satellite(s) 10, et au moins une station sol d'accès satellitaire et de traitement 30, visible depuis le(s) satellite(s) 10 pendant des deuxièmes fenêtres temporelles F2 de rapatriement de données de communication et de localisation de terminaux radioélectriques à localiser.

Ici, sur la Figure 1, par souci de simplification et de clarté de l'illustration un seul terminal 20, un seul satellite défiant 10 de la constellation 12, une seule première fenêtre temporelle F1 d'écoute, et une seule deuxième fenêtre F2 de rapatriement des données sont représentés.

Il est à remarquer que le système satellitaire de communication et localisation 2 selon l'architecture de l'invention peut fonctionner avec un nombre quelconque de terminaux radioélectriques, supérieur ou égal à 1, sous réserve d'un dimensionnement idoine des capacités de transmission des composantes dudit système.

Il est à remarquer que le système satellitaire de communication et localisation 2 selon l'architecture de l'invention peut fonctionner avec une constellation à couverture mondiale limité à un seul satellite. Dans ce cas le temps mis à localiser un terminal n'importe où sur le globe terrestre peut être long.

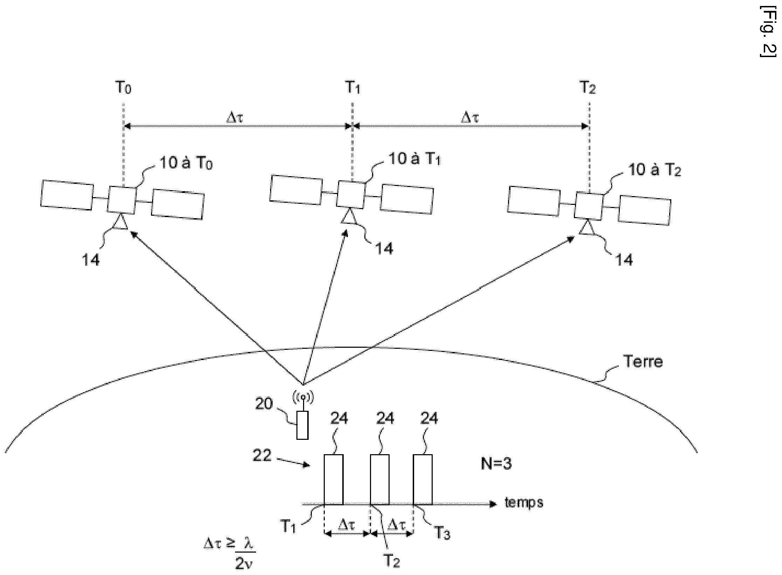

Suivant les Figures 1 et 2, chaque terminal radioélectrique 20 est configuré pour émettre périodiquement une séquence 22 de répétition un nombre prédéterminé N de fois, supérieur ou égal à 2, d'un même paquet 24 de données à accès non encodé ou à accès encodé suivant un schéma d'accès prédéterminé, et qui à chaque fois est décalé temporellement d'un même décalage temporel Δτ prédéterminé, chaque paquet 24 de données à accès non encodé ou accès codé suivant le schéma d'accès étant modulé sur une porteuse radiofréquence à une longueur d'onde prédéterminée λ pour former un signal RF montant de localisation et communication.

Suivant les Figures 1 et 2, chaque satellite 10, ici un seul représenté, comporte une unique antenne d'écoute 14, non directive à grande ouverture angulaire, et est configuré via son antenne d'écoute 14 pour recevoir dans sa première fenêtre d'écoute F1, à partir d'une date de début d'acquisition et pendant une durée d'acquisition prédéterminée, un signal d'écoute formé par le signal radiofréquence de communication et de localisation montant émis par le terminal radiofréquence 20 et tous les autres signaux radiofréquence perceptibles dans une même bande de fréquence que celle dudit signal de communication et de localisation, puis numériser le signal d'écoute à la fréquence porteuse ou à une fréquence intermédiaire en un paquet de données d'acquisition et dater le paquet de données suivant une horloge du satellite à précision élevée, sauvegarder le paquet daté, puis rapatrier les données du paquet daté à la station sol d'accès et de traitement dans la deuxième fenêtre temporelle de rapatriement par une transmission haut débit descendante du signal d'écoute numérisé.

De manière générale, le ou les satellites 10 de la constellation 12 décrivent chacun une orbite comprise dans l'ensemble des orbites basses LEO (en anglais « Low Eart Orbit ») et des orbites moyennes MEO (en anglais « Médium Earth Orbit »). En outre, le satellite ou chaque satellite 10 de la constellation 12 se déplace(nt) à une vitesse de déplacement par rapport à la Terre ayant un module prédéterminé v et le décalage temporel Δ*τ* de deux paquets successifs de la séquence est supérieur ou égal au rapport de la longueur d'onde λ de la porteuse radiofréquence du signal radiofréquence par le double du module v de la vitesse de déplacement du satellite.

Suivant la Figure 1, la station sol d'accès satellitaire et de traitement 30 comporte un ou plusieurs calculateurs électroniques pour déterminer la localisation de chaque terminal radioélectrique à partir des paquets de données datés à accès non encodé ou à accès codé, extraits du signal d'écoute numérisé daté et à partir des éphémérides du ou des satellites de la constellation en utilisant une technique de mesure d'angle(s) d'arrivée par interférométrie séquencée associé à une technique de mesure de dérive(s) Doppler.

La station d'accès satellitaire et de traitement 30 récupère la totalité des signaux d'écoute enregistrés dans le satellite défilant 10 et permet audit satellite de libérer sa mémoire de masse de sauvegarde. La période de revisite du satellite défilant 10 par rapport à la station d'accès satellitaire et de traitement 30 dépend des paramètres d'orbitographie du satellite défilant et de la position géographique de la station d'accès satellitaire et de traitement 30. Par exemple, un satellite défilant 10 en orbite circulaire polaire sera en visibilité avec une station d'accès satellitaire et de traitement 30 un nombre de fois plus important lorsque ladite station est située dans les régions polaires plutôt qu'à l'équateur.

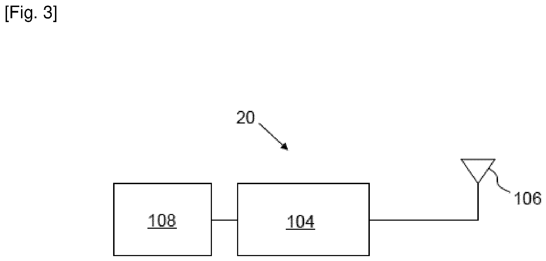

Suivant la Figure 3, un terminal radioélectrique de localisation et de communication 20 selon l'invention, faisant partie par exemple du système de localisation et communication des Figures 1 et 2, comprend un émetteur radiofréquence RF 104 à faible puissance, couplé à une antenne émettrice non directive 106, de préférence omnidirectionnelle, et un module émetteur bande de base 108, connecté en amont de l'émetteur radiofréquence RF 104.

L'émetteur radiofréquence RF 104 l'antenne émettrice 106 du terminal et le module émetteur bande de base 108 sont configurés pour émettre périodiquement une séquence de répétition un nombre prédéterminé de fois N supérieur ou égal à 2 d'un même paquet de données à accès non codé ou à accès encodé suivant un schéma de codage d'accès prédéterminé et qui à chaque fois est décalé temporellement d'un même décalage temporel Δ*τ* prédéterminé, chaque paquet de données à accès non encodé ou non encodé étant modulé sur une porteuse radiofréquence à une longueur d'onde prédéterminée *λ* pour former un signal RF de communication et de localisation.

De manière générale, le décalage temporel de deux paquets successifs de la séquence est supérieur ou égal au rapport de la longueur d'onde *λ* de la porteuse radiofréquence du signal radiofréquence montant à destination du satellite défilant par le double du module v de la vitesse de déplacement du satellite défilant.

Suivant un premier mode de réalisation du terminal de localisation et de communication, le module émetteur bande de base est configuré de sorte que chaque paquet de données à accès non encodé, répété N fois en étant à chaque fois décalé temporellement du même décalage temporel Δ*τ*, a une trame formée d'une entête de synchronisation, d'un identifiant du terminal radioélectrique formant émetteur dudit paquet, et de données utiles de communication à transmettre. Suivant un deuxième mode de réalisation du terminal de localisation et de communication, le module émetteur bande de base est configuré de sorte que chaque paquet de donné à accès encodé, répété N fois en étant à chaque fois décalé temporellement du même décalage temporel, a une trame formée d'un empilement de N codes pseudo-aléatoires PN, de même longueur et mutuellement orthogonaux, modulés par des données à débit plus petit que celui des bribes (en anglais des « chips ») des codes PN, incluant une entête fixe de synchronisation, un identifiant du terminal radioélectrique formant émetteur dudit paquet et des données utiles de communication à transmettre, chaque code PN étant une séquence cyclique déphasée à chaque fois d'un décalage de phase correspondant au décalage temporel Δ*τ*.

Suivant un troisième mode de réalisation du terminal de localisation et de communication, le module émetteur bande de base est configuré de sorte que chaque paquet de données à accès encodé, répété N fois en étant à chaque fois décalé temporellement du même décalage temporel Δ*τ*, a une trame, formée d'un identifiant du terminal radioélectrique formant émetteur dudit paquet, et de données utiles de communication à transmettre, et modulée par une sous-porteuse correspondant à un saut de fréquence vis-à-vis de la fréquence porteuse, différent à chaque fois et dont la valeur dépend du rang temporel du paquet de donnés dans la séquence, la somme du saut de fréquence le plus petit et le saut de fréquence le plus grand étant nulle, i.e. le plus petit saut de fréquence et le plus grand saut de fréquence étant égaux en amplitude et de signes opposés.

De manière optionnelle, le terminal radioélectrique de localisation et de communication peut comprendre un récepteur, connecté via un duplexer à l'antenne émission non directive ou à une deuxième antenne de réception non directive.

Le récepteur est configuré pour recevoir via une liaison descendante du ou des satellites défilants, des messages de signalisation, par exemple de synchronisation ou de correction fréquentielle, ou des données utiles de communication destinées audit terminal.

Le terminal radioélectrique de localisation et de communication peut être fixe par rapport au sol de la Terre, ou embarqué sur un mobile terrestre ou maritime évoluant à vitesse de déplacement relativement faible par rapport à la vitesse des satellites défilants.

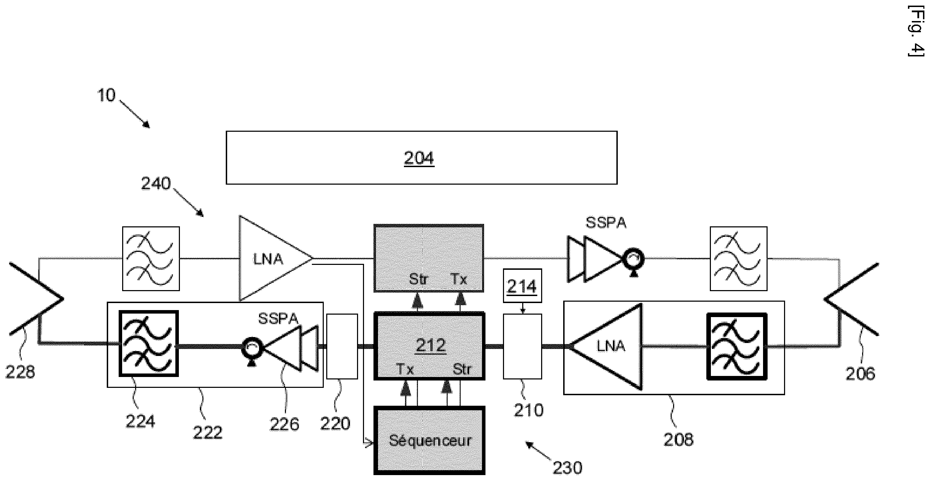

Suivant la Figure 4, le satellite défilant de localisation et de communication 10 selon l'invention, composant du système de localisation et communication 2 des Figures 1 et 2, comprend une plateforme 204 pour faire évoluer le satellite sur une orbite de type LEO ou MEO.

Le satellite défilant 10 comprend une antenne réception d'écoute RF 206, un récepteur RF satellite d'écoute 208, une unité de numérisation 210, et une mémoire de masse de sauvegarde 212, connectés en série.

L'antenne de réception RF d'écoute 206 est une unique antenne non directive à grande ouverture angulaire, par exemple un simple cornet, configurée pour recevoir les signaux radioélectriques RF émis en liaison montante émis par un ou plusieurs terminaux radioélectriques dans une bande de fréquences comprise dans l'ensemble des bandes de fréquences HF, VHF, UHF, L, S, C, X, Ku, Ka, V et Q.

L'antenne de réception RF d'écoute 206 et le récepteur RF satellite d'écoute 208 sont configurés pour recevoir dans une première fenêtre d'écoute satellitaire F1, à partir d'une date de début d'acquisition et pendant une durée d'acquisition prédéterminée, un signal d'écoute formé par un signal radiofréquence de communication et de localisation émis par un terminal radiofréquence et tous les autres signaux radiofréquence perceptibles dans une même bande de fréquence que celle dudit signal de communication et de localisation, formant un signal d'écoute.

L'unité de numérisation 210 est configurée pour numériser le signal d'écoute à la fréquence porteuse ou à une fréquence intermédiaire en un paquet de données d'acquisition et dater le paquet de données d'acquisition suivant sa date d'arrivée à l'aide d'une une horloge bord 214 de précision élevée, le signal d'écoute contenant un signal radiofréquence de communication et de localisation émis par le terminal radiofréquence à localiser.

La mémoire de masse 212 est configurée pour sauvegarder le paquet de données d'acquisition daté.

Ainsi, le satellite défilant 10 peut détecter, dater l'arrivée, numériser et sauvegarder les signaux d'écoute qu'il reçoit en provenance des terminaux radioélectriques dans la bande RF d'écoute pour retransmettre ultérieurement lesdits signaux d'écoute numérisés et datés à la station d'accès satellitaire et de traitement quand une liaison descendante RF de rapatriement des donnés peut être établie entre le satellite défilant et ladite station d'accès et de traitement. Afin d'assurer le rapatriement des données d'écoute sauvegardées, le satellite défilant 10 comporte un modulateur 220 des données d'écoute numérisées et datées, un émetteur RF 222 de rapatriement des données d'écoute numérisés et modulées, incluant un filtre RF 224 et un amplificateur RF de puissance 226, par exemple ici un SSPA (en anglais « Solid State Power Amplifier »), et une antenne émission RF 228 de rapatriement en liaison descendante associée.

Le modulateur 220 de rapatriement des données d'écoute, l'émetteur RF 222 et l'antenne émission RF 228 de rapatriement des données d'écoute sont connectés en série et en aval de la mémoire de sauvegarde des données d'écoute 212.

Comme déjà indiqué, suivant un premier mode de réalisation la numérisation des signaux d'écoute et leur sauvegarde peuvent être mises en œuvre sans modifier la fréquence porteuse en utilisant une fréquence d'échantillonnage suffisante qui permet de reconstituer complètement chaque signal d'écoute à partir de ses échantillons.

Selon un deuxième mode de réalisation de l'invention, l'unité de numérisation 210 est configurée pour opérer une transposition en fréquence sur les signaux d'écoute reçus avant de procéder à leur sauvegarde. De manière particulière, les signaux d'écoute sont transposés en bande de base avant d'être sauvegardés.

Comme déjà indiqué, à chaque signal d'écoute sauvegardé est associée une date d'arrivée représentant la date de début d'acquisition par le satellite défilant 10 pendant une durée d'acquisition prédéterminée.

L'horloge bord 214 à précision élevée qui fournit la date de début d'acquisition associée à chaque signal d'écoute reçu par le satellite défilant est une horloge atomique, synchronisée par exemple avec l'horloge à précision élevée de la station d'accès satellitaire et de traitement 30 lors de son survol par le satellite défilant ou avec des horloges dérivées d'autres satellites en orbites tels que les satellites des systèmes GPS et Galileo.

La modulation de la porteuse mise en œuvre sur la liaison descendante de rapatriement par le modulateur 220 de rapatriement des données d'écoute est par exemple une modulation BPSK (en anglais « Binary Phase Shift Keying ») ou une modulation MSK (en anglais « Minimum Shift Keying »).

La fréquence porteuse modulée par le modulateur 220 de rapatriement des données d'écoute est une fréquence comprise dans les bandes de fréquences L, S, C, X, Ka, Ku, V et Q.

L'antenne d'émission 228 et de rapatriement des données d'écoute vers la station d'accès satellitaire et de traitement 30 est de préférence une antenne directive.

L'antenne d'émission 228 satellite 228 et de rapatriement des données d'écoute est une antenne directive, ayant un diagramme de rayonnement qui assure un bilan de la liaison entre le satellite défilant 10 et la station d'accès satellitaire et de traitement 30 bouclé positivement pour une puissance d'émission de l'émetteur 222 et un diagramme de rayonnement directif de l'antenne de réception de la station d'accès satellitaire et de traitement fixés.

L'antenne réception d'écoute RF 206, le récepteur RF satellite d'écoute 208, l'unité de numérisation 210, la mémoire de masse de sauvegarde 212, l'horloge bord 214, le modulateur 220 de rapatriement des données d'écoute, l'émetteur RF 222 de rapatriement des données d'écoute et l'antenne émission RF 228 de rapatriement des données d'écoute forment une charge utile d'écoute 230.

De manière optionnelle, le satellite défilant 10 peut comprendre une charge utile de communication 240 de transfert de données de communication et/ou de signalisation émises, par la station d'accès satellitaire et de traitement à destination des terminaux radioélectriques. La charge utile de communication 240 partage ici sur la Figure 4 en mode réception l'antenne émission de la charge utile d'écoute 230 en y étant connectée via un premier duplexeur non représenté sur la Figure 4 et en mode émission l'antenne réception de la charge utile d'écoute en y étant connecté par via un deuxième duplexeur, également non représenté sur la Figure 4.

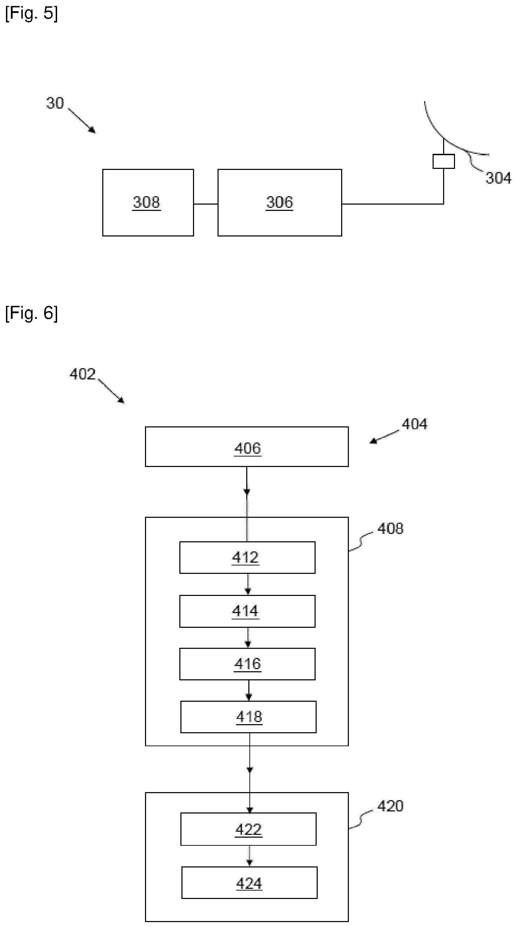

Suivant la Figure 5, une station sol d'accès et de traitement 30 selon l'invention, composante du système de localisation et communication 2 des Figures 1 et 2, comprend une antenne de réception sol 304 des données d'écoute rapatriées, un récepteur sol 306 de la liaison descendante de rapatriement des données d'écoute et une unité de traitement numérique sol 308.

L'antenne de réception sol 304 est supposée suffisamment directive pour assurer de concert avec l'antenne d'émission satellite et l'émetteur satellite des données d'écoute rapatriées un bilan de liaison bouclé positivement.

Le récepteur sol 306 et l'unité de traitement numérique sol 308 sont configurés pour :
- extraire du signal d'écoute numérisé rapatrié une séquence de N paquets répétés et décalés à chaque fois d'un même décalage temporelle Δ*τ* prédéterminé, à accès non encodé ou à accès encodé suivant un schéma d'accès prédéterminé, d'une séquence émise par un le terminal radioélectrique :
   ** en transposant le signal d'écoute numérisé rapatrié en bande de base ou dans une bande de fréquences intermédiaire ; puis
   ** en décodant et démodulant le signal d'écoute transposé suivant le schéma d'accès utilisé en une séquence des N paquets reçus par le satellite, décodés suivant l'encodage d'accès lorsqu'il existe et démodulés, une estimation de la dérive Doppler et une estimation du décalage temporel entre les paquets consécutifs de la séquence étant effectué en parallèle, et pour
- localiser le terminal radioélectrique identifié suivant un ou deux angles d'arrivée à partir des décalages temporels en réception du satellite estimé, de la datation de la séquence d'écoute et des éphémérides du satellite, en utilisant une interférométrie séquencée.

De manière optionnelle, la station d'accès satellitaire et de traitement 30 peut en outre être configurée pour transmettre des données de signalisation et/ou de communication vers un ou plusieurs satellite(s) défilant(s) 10 ou via un ou plusieurs satellite(s) défilant(s) vers le terminal radioélectrique 20. Par exemple, les données de signalisation concernent des données de correction ou d'aide à la correction de dérives de l'horloge bord embarquée dans le satellite défilant 10 et servant pour dater l'arrivée des signaux d'écoute reçus.

Suivant la Figure 6, un procédé de communication et de localisation 402 d'un terminal radioélectrique selon l'invention est mis en œuvre par le système satellitaire de communication et de localisation 2 de la Figure 1. Le procédé de communication et de localisation 402 comprend un ensemble 404 d'étapes.

Dans une première étape 406, un terminal radioélectrique 10 émet périodiquement une séquence de répétition un nombre prédéterminé N de fois, supérieur ou égal à 2, d'un même paquet de données à accès non encodé ou à accès encodé suivant un schéma de codage d'accès prédéterminé et qui à chaque fois est décalé temporellement d'un même décalage temporel Δτ prédéterminé, chaque paquet de données à accès non encodé ou non encodé étant modulé sur une porteuse radiofréquence à une longueur d'onde prédéterminée λ pour former un signal RF de communication et de localisation.

Il est à remarquer que de manière générale le nombre N de répétitions du même paquet dans une séquence émise par le terminal radioélectrique dépend du bilan de liaison de la liaison montant depuis le terminal radioélectrique en mode émission et le satellite en mode écoute.

De manière particulière, le nombre N de répétitions du même paquet dans une séquence émise par le terminal radioélectrique est compris entre 2 et 16, de préférence 2 et 8.

Ensuite, dans une deuxième étape 408, le satellite 10 reçoit 412 via son unique antenne d'écoute à grande ouverture angulaire dans la première fenêtre d'écoute dudit satellite, à partir d'une date de début d'acquisition et pendant une durée d'acquisition prédéterminée, un signal d'écoute formé par le signal radiofréquence de communication et de localisation émis par le terminal radiofréquence 20 et tous les autres signaux radiofréquence perceptibles dans une même bande de fréquence que celle dudit signal de communication et de localisation, formant un signal d'écoute, puis numérise 414 le signal d'écoute à la fréquence porteuse ou à une fréquence intermédiaire en un paquet de données d'acquisition et dater suivant une horloge du satellite à précision élevée le paquet de données d'acquisition, sauvegarde 416 le paquet d'acquisition daté, puis rapatrie 418 les données du paquet d'acquisition daté à la station sol d'accès et de traitement dans la deuxième fenêtre temporelle de rapatriement par une transmission haut débit descendante du signal d'écoute numérisé.

Ensuite, dans une troisième étape 420, la station sol d'accès satellitaire et de traitement détermine la localisation du terminal radioélectrique à partir des paquets de données à accès non encodé ou à accès encodé, extraits du signal d'écoute numérisé daté et d'une même séquence associée audit terminal radioélectrique, et à partir des éphémérides du satellite en utilisant une technique de mesure d'angle(s) d'arrivée par interférométrie séquencée associée à une technique de mesure de dérive(s) Doppler.

Lors de la mise en œuvre de la troisième étape 420, la station sol d'accès satellitaire et de traitement :
- extrait 422 du signal d'écoute numérisé rapatrié les N paquets de la séquence émise par le terminal radioélectrique :
   * en transposant le signal d'écoute numérisé rapatrié en bande de base ou dans une bande de fréquences intermédiaire ; puis
   * en décodant et démodulant le signal d'écoute transposé suivant le schéma d'accès utilisé en une séquence des N paquets reçus par le satellite, décodés suivant l'encodage d'accès lorsqu'il existe et démodulés, une estimation de la dérive Doppler et une estimation du décalage temporel entre les paquets consécutifs de la séquence étant effectué en parallèle, puis
- localise 424 le terminal radioélectrique identifié suivant un ou deux angles d'arrivée à partir des décalages temporels en réception du satellite estimé, de la datation de la séquence d'écoute et des éphémérides du satellite, en utilisant une interférométrie séquencée.

De manière générale, le procédé de localisation et communication est réalisé par l'émission d'une ou plusieurs séquences de paquets et utilise une constellation satellitaire d'un ou plusieurs satellites d'écoute et de rapatriement des données d'écoute.

De manière particulière, lorsque la constellation du système satellitaire comporte un seul satellite défilant à couverture mondiale, l'unique satellite reçoit au moins deux séquences du même paquet du terminal radiofréquence pendant une même visite à la même fenêtre temporelle d'écoute en deux emplacements distincts d'un même arc de l'orbite ou lors de deux visites différentes à deux fenêtres temporelles d'écoute différentes en deux arcs séparés de l'orbite.

De manière particulière, lorsque la constellation du système satellitaire comporte au moins deux satellites, au moins deux satellites reçoivent chacun la même séquence du même paquet dans des fenêtres temporelles d'écoute respectives qui sont proches ou se recoupent.

De manière particulière, au moins deux mesures d'angles d'arrivées non coplanaires et de dérives Doppler associées sont déterminées et permettent une localisation tridimensionnelle 3D sans ambigüité du terminal radiofréquence situé au sol.

Suivant un premier mode de réalisation, dit « mode de transmission par séquence temporelle simple », chaque paquet de donnée à accès non encodé, répété N fois en étant à chaque fois décalé temporellement du même décalage temporel Δτ, a une trame formée d'une entête de synchronisation, d'un identifiant du terminal radioélectrique formant émetteur dudit paquet, et de données utiles de communication à transmettre.

Suivant un deuxième mode de réalisation, dit « mode de transmission par code pseudo-aléatoire PN séquencé », chaque paquet de données à accès encodé, répété N fois en étant à chaque fois décalé temporellement du même décalage temporel, a une trame formée d'un empilement de N codes pseudo-aléatoires PN, de même longueur et mutuellement orthogonaux, modulés par des donnés à débit plus petit que celui des bribes des codes PN incluant une entête fixe de synchronisation, un identifiant du terminal radioélectrique formant émetteur dudit paquet et des données utiles de communication à transmettre, chaque code PN étant une séquence cyclique déphasée à chaque fois d'un décalage de phase correspondant au décalage temporel Δ*τ*.

Suivant un troisième mode de réalisation, dit « mode de transmission par évasion de fréquence séquencée », chaque paquet de données à accès encodé, répété N fois en étant à chaque fois décalé temporellement du même décalage temporel Δ*τ*, a une trame, formée d'un identifiant du terminal radioélectrique formant émetteur dudit paquet, et de données utiles de communication à transmettre, et modulée par une sous-porteuse correspondant à un saut de fréquence vis-à-vis de la fréquence porteuse, différent à chaque fois et dont la valeur dépend du rang temporel du paquet de donnés dans la séquence, la somme du saut de fréquence le plus petit et le saut de fréquence le plus grand étant nulle.

Dans le cas où le deuxième mode de réalisation du mode de transmission est utilisé, la station la station sol d'accès satellitaire et de traitement du signal d'écoute numérisé rapatrié sur la liaison descendante de rapatriement met en œuvre les étapes consistant à :
* transposer le signal d'écoute numérisé rapatrié en bande de base ou dans une bande de fréquences intermédiaire ; puis
* démoduler et décoder le signal d'écoute transposé en N paquets d'une même séquence reçu, associés audit terminal radioélectrique et reçus par le satellite, et en parallèle effectuer une estimation de la dérive Doppler et une estimation du décalage temporel entre les paquets consécutifs de la séquence,
** en corrélant en parallèle le signal d'écoute numérisé avec les N répliques des codes PN attendus ; puis
** en estimant les décalages temporels entre les paquets consécutifs de la séquence à partir des pics de corrélation obtenus ; puis
* déterminer la localisation du terminal radioélectrique à partir des décalages temporels entre les paquets consécutifs de la séquence, de la datation de la séquence d'écoute et des éphémérides du satellite en utilisant une technique de mesure d'angle(s) d'arrivée par interférométrie séquencée associée à une technique de mesure de dérive(s) Doppler.

Dans le cas où le deuxième mode de réalisation du mode de transmission est utilisé, la station la station sol d'accès satellitaire et de traitement du signal d'écoute numérisé rapatrié sur la liaison descendante de rapatriement met en œuvre les étapes consistant à :
* transposer le signal d'écoute numérisé rapatrié en bande de base ou dans une bande de fréquences intermédiaire ; puis
* démoduler et décoder le signal d'écoute transposé en N paquets d'une même séquence reçu, associés audit terminal radioélectrique et reçus par le satellite, et en parallèle effectuer une estimation de la dérive Doppler et une estimation du décalage temporel entre les paquets consécutifs de la séquence, en
** en corrélant le signal d'écoute avec les signaux des N paquets de la séquence par un recalage attendu en fréquence desdits signaux des N paquets et en sommant les signaux des desdits paquets recalés en fréquence en appliquant à chacun un déphasage spécifique permettant d'augmenter ladite valeur du rapport signal sur bruit ; puis
** en estimant les décalages temporels entre les paquets consécutifs de la séquence à partir des signaux des paquets démodulés ; puis
* déterminer la localisation du terminal radioélectrique à partir des décalages temporels entre les paquets consécutifs de la séquence, de la datation de la séquence d'écoute et des éphémérides du satellite en utilisant une technique de mesure d'angle(s) d'arrivée par interférométrie séquencée associée à une technique de mesure de dérive(s) Doppler.

L'homme du métier comprendra que le systèmes ou des sous-système selon les modes de réalisation de l'invention peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Le système satellitaire de communication et localisation de la Figure 1 et le procédé de communication et de localisation correspondant de la Figure 6 peuvent être appliqués notamment à l'Internet des objets IoT (en anglais « Internet of Things ») qui implique des objets qui interagissent avec leur environnement par le biais d'un ou plusieurs capteurs, et qui sont connectés à un réseau de télécommunications leur permettant d'envoyer les données captées pour que celles-ci soit analysées et exploitées. Ces objets dits connectés se caractérisent par une faible quantité de données à transmettre, de façon sporadique ou régulière, qui correspond habituellement à des relevés de mesure, et un faible niveau de puissance d'émission résultant du fait que l'alimentation en énergie de ces objets repose généralement sur des batteries, rechargeables ou non. Suivant les applications, un objet connecté peut être mobile et la détermination de sa localisation peut présenter le même niveau d'importance que les données qu'il émet. L'IoT se repose essentiellement sur les réseaux de la téléphonie mobile pour permettre aux objets équipés d'une carte SIM d'envoyer leurs données. Des réseaux cellulaires plus adaptés au contexte IoT offrant un bas débit et une large couverture sont aussi en pleine émergence, en l'occurrence les réseaux LPWAN (« Low-Power Wide-Area Network »). Les réseaux cellulaires qui assurent la communication et la localisation des objets connectés présentent, néanmoins, plusieurs inconvénients liés surtout à la propagation multi-trajets qui se manifeste dans ces réseaux, à l'impossibilité d'assurer une couverture mondiale qui inclut les mers et les océans et au coût du déploiement. Les réseaux de télécommunications par satellite permettent une couverture mondiale avec un coût réduit tout en permettant de relayer les signaux émis par les objets IoT et de déterminer leur localisation.

Par ailleurs, l'invention n'est pas limitée aux modes de réalisation décrits ci-avant à titre d'exemple non limitatif. Elle englobe toutes les variantes de réalisation qui pourront être envisagées par l'homme du métier.

## Revendications

1. Procédé de localisation et de communication d'un terminal radioélectrique, mis en œuvre par un système satellitaire (2) comprenant un ou plusieurs satellite(s) défilant(s) (10) à couverture mondiale, un ou plusieurs terminaux radioélectriques (20) à localiser, visible(s) depuis le ou les satellite(s) (10) pendant des premières fenêtres temporelles F1 d'écoute des terminaux par le(s) satellite(s), et au moins une station sol d'accès satellitaire et de traitement (30) visible depuis le(s) satellite(s) (10) pendant des deuxièmes fenêtres temporelles F2 de rapatriement de données de communication et de localisation de terminaux radioélectriques à localiser, le procédé étant **caractérisé en ce qu'**il comprend les étapes consistant à :
- émettre (406) périodiquement par un terminal radioélectrique une séquence de répétition un nombre prédéterminé N de fois, supérieur ou égal à 2, d'un même paquet (24) de données à accès non encodé ou à accès encodé suivant un schéma de codage d'accès prédéterminé et qui à chaque fois est décalé temporellement d'un même décalage temporel Δ*τ* prédéterminé, chaque paquet de données à accès non encodé ou encodé étant modulé sur une porteuse radiofréquence à une longueur d'onde prédéterminée *λ* pour former un signal RF de communication et de localisation ; puis
- recevoir (412) par le satellite défilant (10) via une unique antenne à grande ouverture angulaire dans la première fenêtre d'écoute dudit satellite, à partir d'une date de début d'acquisition et pendant une durée d'acquisition prédéterminée, un signal d'écoute formé par le signal radiofréquence de communication et de localisation émis par le terminal radiofréquence et tous les autres signaux radiofréquence perceptibles dans une même bande de fréquence que celle dudit signal de communication et de localisation, formant un signal d'écoute, puis numériser (414) le signal d'écoute à la fréquence porteuse ou à une fréquence intermédiaire en un paquet de données d'acquisition et dater suivant une horloge du satellite à précision élevée le paquet de données d'acquisition, sauvegarder (416) le paquet d'acquisition daté, puis rapatrier (418) les données du paquet d'acquisition daté à la station sol d'accès et de traitement dans la deuxième fenêtre temporelle de rapatriement par une transmission haut débit descendante du signal d'écoute numérisé ; puis
- déterminer (420) par la station sol d'accès satellitaire et de traitement la localisation du terminal radioélectrique à partir des paquets de données à accès non encodé ou à accès encodé, extraits du signal d'écoute numérisé daté et d'une même séquence associée audit terminal radioélectrique, et à partir des éphémérides du satellite en utilisant une technique de mesure d'angle(s) d'arrivée par interférométrie séquencée associée à une technique de mesure de dérive(s) Doppler.

2. Procédé de localisation et de communication selon la revendication 1, dans lequel le satellite ou chaque satellite (10) de la constellation (12) se déplace à une vitesse de déplacement par rapport à la Terre ayant un module prédéterminé v et le décalage temporel de deux paquets successifs de la séquence est supérieur ou égal au rapport de la longueur d'onde *λ* de la porteuse radiofréquence du signal radiofréquence par le double du module v de la vitesse de déplacement du satellite.

3. Procédé de localisation et de communication selon l'une des revendications 1 à 2, dans lequel :
- chaque paquet (24) de données à accès non encodé, répété N fois en étant à chaque fois décalé temporellement du même décalage temporel Δτ, a une trame formée d'une entête de synchronisation, d'un identifiant du terminal radioélectrique formant émetteur dudit paquet, et de données utiles de communication à transmettre ; ou
- chaque paquet (24) de donné à accès encodé, répété N fois en étant à chaque fois décalé temporellement du même décalage temporel, a une trame formée d'un empilement de N codes pseudo-aléatoires PN, de même longueur et mutuellement orthogonaux, modulés par des donnés à débit plus petit que celui des bribes des codes PN incluant une entête fixe de synchronisation, un identifiant du terminal radioélectrique formant émetteur dudit paquet et des données utiles de communication à transmettre, chaque code PN étant une séquence cyclique déphasée à chaque fois d'un décalage de phase correspondant au décalage temporel Δ*τ* ; ou
- chaque paquet (24) de données à accès encodé, répété N fois en étant à chaque fois décalé temporellement du même décalage temporel Δ*τ*, a une trame, formée d'un identifiant du terminal radioélectrique formant émetteur dudit paquet, et de données utiles de communication à transmettre, et modulée par une sous-porteuse correspondant à un saut de fréquence vis-à-vis de la fréquence porteuse, différent à chaque fois et dont la valeur dépend du rang temporel du paquet de donnés dans la séquence, la somme du saut de fréquence le plus petit et le saut de fréquence le plus grand étant nulle.

4. Procédé de localisation et de communication selon l'une des revendications 1 à 3, dans lequel un ou deux angles d'arrivée sont déterminés sans ambigüité par interférométrie séquencée associée à la mesure de la dérive Doppler.

5. Procédé de localisation et de communication selon l'une des revendications 1 à 4, dans lequel la station sol d'accès satellitaire et de traitement (30) :
- extrait (422) du signal d'écoute numérisé rapatrié les N paquets de la séquence émise par le terminal radioélectrique :
* en transposant le signal d'écoute numérisé rapatrié en bande de base ou dans une bande de fréquences intermédiaire ; puis
* en décodant et démodulant le signal d'écoute transposé suivant le schéma d'accès utilisé en une séquence des N paquets reçus par le satellite, décodés suivant l'encodage d'accès lorsqu'il existe et démodulés, une estimation de la dérive Doppler et une estimation du décalage temporel entre les paquets consécutifs de la séquence étant effectué en parallèle, puis
- localise (424) le terminal radioélectrique identifié suivant un ou deux angles d'arrivée à partir des décalages temporels en réception du satellite estimé, de la datation de la séquence d'écoute et des éphémérides du satellite, en utilisant une interférométrie séquencée.

6. Procédé de localisation et de communication selon l'une des revendications 1 à 5, dans lequel :
- le nombre N de répétitions du même paquet (24) dans une séquence émise par le terminal radioélectrique est compris entre 2 et 16, de préférence 2 et 8 ; et/ou
- le nombre N de répétitions du même paquet dans une séquence émise par le terminal radioélectrique dépend du bilan de liaison de la liaison montant depuis le terminal radioélectrique en mode émission et le satellite en mode écoute.

7. Procédé de localisation et de communication selon l'une des revendications 1 à 6, dans lequel
le système satellitaire (2) comporte un seul satellite défilant (10) à couverture mondiale et l'unique satellite (10) reçoit au moins deux séquences du même paquet du terminal radiofréquence pendant une même visite à la même fenêtre temporelle d'écoute sur deux arcs séparés de l'orbite ou lors de deux visites différentes à deux fenêtres temporelles d'écoute différentes ; ou
le système satellitaire comporte une constellation d'au moins deux satellites et au moins deux satellites reçoivent chacun la même séquence du même paquet dans des fenêtres temporelles d'écoute respectives qui se recoupent.

8. Procédé de localisation et de communication selon la revendication 7, dans lequel au moins deux mesures d'angles d'arrivées non coplanaires et de dérives Doppler associées sont déterminées et permettent une localisation tridimensionnelle 3D sans ambigüité du terminal radiofréquence situé au sol.

9. Procédé de localisation et de communication selon l'une des revendications 1 à 8, dans lequel :
- chaque paquet de données à accès encodé, répété N fois en étant à chaque fois décalé temporellement du même décalage temporel, a une trame formée d'un empilement de N codes pseudo-aléatoires PN, de même longueur et mutuellement orthogonaux, modulés par des donnés à débit plus petit que celui des bribes des codes PN incluant une entête fixe de synchronisation, un identifiant du terminal radioélectrique formant émetteur dudit paquet et des données utiles de communication à transmettre, chaque code PN étant une séquence cyclique déphasée à chaque fois d'un décalage de phase correspondant au décalage temporel Δ*τ* ; et
- la station sol d'accès satellitaire et de traitement du signal d'écoute numérisé rapatrié sur la liaison descendante d'accès met en œuvre les étapes consistant à :
* transposer le signal d'écoute numérisé rapatrié en bande de base ou dans une bande de fréquences intermédiaire ; puis
* démoduler et décoder le signal d'écoute transposé en N paquets d'une même séquence reçu, associés audit terminal radioélectrique et reçus par le satellite, et en parallèle effectuer une estimation de la dérive Doppler et une estimation du décalage temporel entre les paquets consécutifs de la séquence,
** en corrélant en parallèle le signal d'écoute numérisé avec les N répliques des codes PN attendus ; puis
** en estimant les décalages temporels entre les paquets consécutifs de la séquence à partir des pics de corrélation obtenus ; puis
* déterminer la localisation du terminal radioélectrique à partir des décalages temporels entre les paquets consécutifs de la séquence, de la datation de la séquence d'écoute et des éphémérides du satellite en utilisant une technique de mesure d'angle(s) d'arrivée par interférométrie séquencée associée à une technique de mesure de dérive(s) Doppler.

10. Procédé de localisation et de communication selon l'une des revendications 1 à 8, dans lequel :
- chaque paquet de données à accès encodé, répété N fois en étant à chaque fois décalé temporellement du même décalage temporel Δ*τ*, a une trame, formée d'un entête de synchronisation, d'un identifiant du terminal radioélectrique formant émetteur dudit paquet, et de données utiles de communication à transmettre, et modulée par une sous-porteuse correspondant à un saut de fréquence vis-à-vis de la fréquence porteuse, différent à chaque fois et dont la valeur dépend du rang temporel du paquet de donnés dans la séquence, la somme du saut de fréquence le plus petit et le saut de fréquence le plus grand étant nulle ; et
- la station la station sol d'accès et de traitement du signal d'écoute numérisé rapatrié sur la liaison descendante d'accès met en œuvre les étapes consistant à :
* transposer le signal d'écoute numérisé rapatrié en bande de base ou dans une bande de fréquences intermédiaire ; puis
* démoduler et décoder le signal d'écoute transposé en N paquets d'une même séquence reçu, associés audit terminal radioélectrique et reçus par le satellite, et en parallèle effectuer une estimation de la dérive Doppler et une estimation du décalage temporel entre les paquets consécutifs de la séquence, en
** en corrélant le signal d'écoute avec les signaux des N paquets de la séquence par un recalage attendu en fréquence desdits signaux des N paquets et en sommant les signaux des desdits paquets recalés en fréquence en appliquant à chacun un déphasage spécifique permettant d'augmenter ladite valeur du rapport signal sur bruit ; puis
** en estimant les décalages temporels entre les paquets consécutifs de la séquence à partir des signaux des paquets démodulés ; puis
* déterminer la localisation du terminal radioélectrique à partir des décalages temporels entre les paquets consécutifs de la séquence, de la datation de la séquence d'écoute et des éphémérides du satellite en utilisant une technique de mesure d'angle(s) d'arrivée par interférométrie séquencée associée à une technique de mesure de dérive(s) Doppler.

11. Système satellitaire de localisation et de communication d'au moins un terminal radioélectrique, comprenant :
un ou plusieurs satellite(s) défilant(s) (10) d'une constellation (12) à couverture mondiale, un ou plusieurs terminaux radioélectriques (20) à localiser, visible(s) depuis le ou les satellite(s) (10) pendant des premières fenêtres temporelles F1 d'écoute des terminaux par le(s) satellite(s), et au moins une station sol d'accès satellitaire et de traitement (30) visible depuis le(s) satellite(s) (10) pendant des deuxièmes fenêtres temporelles F2 de rapatriement de données de communication et de localisation de terminaux radioélectriques à localiser,
le système de communication étant **caractérisé en ce que** :
- chaque terminal radioélectrique (20) est configuré pour émettre périodiquement une séquence de répétition un nombre prédéterminé N de fois, supérieur ou égal à 2, d'un même paquet de données à accès non encodé ou à accès encodé schéma d'accès prédéterminé, et qui à chaque fois est décalé temporellement d'un même décalage temporel Δ*τ* prédéterminé, chaque paquet de données à accès non encodé ou accès codé suivant le schéma d'accès étant modulé sur une porteuse radiofréquence à une longueur d'onde prédéterminée *λ* pour former un signal RF de communication et de localisation ; et
- chaque satellite défilant (10) comporte une unique antenne d'écoute, non directive à grande ouverture angulaire, et est configuré via son antenne d'écoute pour recevoir dans sa première fenêtre d'écoute, à partir d'une date de début d'acquisition et pendant une durée d'acquisition prédéterminée, un signal d'écoute formé par le signal radiofréquence de communication et de localisation émis par le terminal radiofréquence et tous les autres signaux radiofréquence perceptibles dans une même bande de fréquence que celle dudit signal de communication et de localisation, puis numériser le signal d'écoute à la fréquence porteuse ou à une fréquence intermédiaire en un paquet de données d'acquisition et dater le paquet de données suivant une horloge du satellite à précision élevée, sauvegarder le paquet daté, puis rapatrier les données du paquet daté à la station sol d'accès et de traitement dans la deuxième fenêtre temporelle de rapatriement par une transmission haut débit descendante du signal d'écoute numérisé ; et
- la station sol d'accès satellitaire et de traitement (30) comporte un ou plusieurs calculateurs électroniques pour déterminer la localisation de chaque terminal radioélectrique à partir des paquets de données datés à accès non encodé ou à accès codé, extraits du signal d'écoute numérisé daté et à partir des éphémérides du ou des satellites de la constellation en utilisant une technique de mesure d'angle(s) d'arrivée par interférométrie séquencée associé à une technique de mesure de dérive(s) Doppler.

12. Système de localisation et de communication d'au moins un terminal radioélectrique selon la revendication 11, dans lequel :
- le ou les satellites (10) décrivent chacun une orbite comprise dans l'ensemble des orbites basses LEO et des orbites moyennes MEO ; et
- le satellite ou chaque satellite (10) de la constellation (12) se déplace(nt) à une vitesse de déplacement par rapport à la Terre ayant un module prédéterminé v et le décalage temporel de deux paquets successifs de la séquence est supérieur ou égal au rapport de la longueur d'onde *λ* de la porteuse radiofréquence du signal radiofréquence par le double du module v de la vitesse de déplacement du satellite.
